# EUROPÄISCHE PATENTSCHRIFT

(11) **EP 1 956 252 B1**
(45) Veröffentlichungstag und Bekanntmachung des Hinweises auf die Patenterteilung: **20.01.2010**
(21) Anmeldenummer: 07021360.8
(22) Anmeldetag: 02.11.2007
(51) Int. Cl.: F16C 3/035, F16D 3/06

(54) **Längsverschiebeeinheit für Gelenkwellen**
Longitudinal traverse unit for drive trains
Unité de déplacement longitudinal pour arbres de transmission

(30) Priorität: 09.02.2007 DE 102007007151
(43) Veröffentlichungstag der Anmeldung: 13.08.2008
(73) Patentinhaber: Spicer Gelenkwellenbau GmbH, 45143 Essen (DE)
(72) Erfinder: Erlmann, Nikolaus Martin, 40213 Düsseldorf (DE)
(74) Vertreter: Müller, Thomas Michael

(56) Entgegenhaltungen:
- WO-A-2006/048029
- GB-A- 1 372 402
- US-A- 3 279 218
- US-A1- 2001 018 369

## Beschreibung

Die Erfindung betrifft eine Längsverschiebeeinheit für Gelenkwellen gemäß Oberbegriff von Anspruch 1. Gelenkwellen mit solchen Längsverschiebeeinheiten finden beispielsweise Einsatz im Antriebsstrang im Maschinenbau oder Fahrzeugbau.

Die US 4 981 459 beschreibt eine Längsverschiebeeinheit für Gelenkwellen mit einem ersten Wellenelement, das eine Außenfläche mit darin umfangsverteilt und parallel zu einer Längsachse sich erstreckenden ersten Rillen aufweist. Ein zweites Wellenelement ist mit einer sich entlang der Längsachse erstreckenden Durchgangsbohrung versehen, in der das erste Wellenelement aufgenommen ist. In der Durchgangsbohrung befinden sich, den ersten Rillen jeweils gegenüberliegend, zweite Rillen, die parallel zur Längsachse verlaufen. In der Durchgangsbohrung befindet sich zwischen dem ersten Wellenelement und dem zweiten Wellenelement ein hülsenförmiger Käfig, der Kugeln führt, die jeweils in einander gegenüberliegende erste Rillen und zweite Rillen eingreifen. Der Rillenauslauf oder das Ende einer Nut in der Außenfläche des ersten Wellenelements, die an die Rillen anschließt, bilden eine Begrenzung bzw. Anschlag für die Kugeln, die nahe dem zugehörigen Ende des Käfigs gehalten sind. Somit wird eine Wegbegrenzung des Käfigs zum ersten Wellenelement erreicht. Ist ein Rillenauslauf vorgesehen, kann das zu einem Verklemmen führen. Ist eine Umfangsnut vorgesehen, die, wie beschrieben, entlang der Längsachse zwei hintereinander angeordnete Kugeln aufnimmt, so wird die Drehmoment-übertragungsfähigkeit verringert. Ein weiterer Nachteil besteht darin, dass bei schnellen Bewegungen die Kugeln entsprechend heftig gegen die Anschläge anlaufen und Schädigungen eintreten können.

Die FR 1 373 752 beschreibt eine Längsverschiebeeinheit, bei der, anders als bei dem vorbeschriebenen Stand der Technik, keine freie Einstellung des Käfigs entlang der Längsachse zwischen erstem Wellenelement und zweitem Wellenelement vorgesehen ist, sondern der Käfig zwischen Federn angeordnet ist, die an Anschlägen derart abgestützt sind, dass der Käfig zu einer Mittenstellung beaufschlagt wird. Die Federkräfte, die erforderlich sind, tatsächlich die Mittenstellung zu bewirken, müssen entsprechend hoch ausgelegt werden, was dazu führt, dass keine Leichtgängigkeit mehr gegeben ist.

Aus der GB 1372402 ist eine Längsverschiebeeinheit bekannt, bei der drehmomentübertragende Kugeln über einen Kugelkäfig und über Federmittel axial spielfrei zwischen der Profilhülse und dem Profilzapfen abrollbar gehalten sind.

Auch aus der WO 2006/048029 A ist eine Längsverschiebeeinheit bekannt, bei der der Kugelkäfig auch bei Drehmomentfreiheit eine definierte Lage beibehält. Erreicht wird dies durch Federn, die durch Axialanschläge entweder vorgespannt oder nicht vorgespannt einsitzen. Die Federn können entweder lose, im Sinne von nicht fest verbunden, an den Axialanschlägen anliegen oder fest mit diesen Axialanschlägen verbunden sein. Der Kugelkäfig ist somit bei Relativbewegung des Innenteils und des Außenteils zueinander über das Abrollen der Kugeln federbeaufschlagt.

Der Erfindung liegt die Aufgabe zugrunde, eine Längsverschiebeeinheit vorzusehen, bei der sowohl eine Leichtgängigkeit im Bereich der normalen Relativverstellung der beiden Wellenelemente entlang der Längsachse zueinander erreicht wird, als auch zu den Endlangen hin eine Schädigung der Bauteile vermieden wird.

Gelöst wird diese Aufgabe erfindungsgemäß durch eine Längsverschiebeeinheit für Gelenkwellen umfassend
- eine Längsachse,
- ein erstes Wellenelement mit
   - einer Außenfläche,
   - ersten Rillen, die parallel zur Längsachse verlaufen und umfangsverteilt in der Außenfläche angeordnet sind,
- ein zweites Wellenelement mit
   - einer entlang der Längsachse sich erstreckenden Durchgangsbohrung, in der das erste Wellenelement aufgenommen ist,
   - in der Durchgangsbohrung, den ersten Rillen jeweils gegenüberliegend angeordneten zweiten Rillen, die parallel zur Längsachse verlaufen und umfangsverteilt angeordnet sind,
- einen hülsenförmigen Käfig, der
   - in der Durchgangsbohrung zwischen erstem Wellenelement und zweitem Wellenelement angeordnet ist und Wälzkörper führt, die jeweils in einander gegenüberliegende erste Rillen und zweite Rillen eingreifen,
   - umfangsverteilt parallel zur Längsachse verlaufende Durchbrüche mit Längsenden aufweist,
   - Druckfedern aufweist, die zwischen den Längsenden in den Durchbrüchen vorgespannt gehalten sind,
- mindestens einen Anschlag, der
   - einem der Wellenelemente zugeordnet ist und gegen den die Druckfedern nach Durchmessen einer von den Druckfedern unbeaufschlagten freien Verschiebung des Käfigs zwischen den beiden Wellenelementen zur Anlage kommen.

Von Vorteil bei dieser Ausbildung ist, dass die Längsverschiebeeinheit im normalen Arbeitsbereich bei Relativverstellung der beiden Wellenelemente zueinander reibungsarm arbeitet, weil nur eine Rollreibung gegeben ist. Die Druckfedern sind nämlich nicht wirksam in der Hinsicht, dass sie den Käfig zu einer vorgegebenen Stellung hin beaufschlagen. Bei Annäherung zu den jeweils größtmöglichen Verstellweg kommen zunächst die Federn gegen Anschläge zur Anlage, so dass bei der jeweiligen Bewegung, sei es bei dieser Auszugsbewegung der beiden teleskopisch ineinander geführten Wellenelemente oder bei dem Zusammenschieben derselben, so dass eine Dämpfung der Bewegung des Käfigs erfolgt und die Schädigung von Bauteilen vermieden wird. Dabei können der bzw. die Anschläge so angeordnet sein, dass selbst dann, wenn die Kugeln im ersten Wellenelement einen Auslauf aufweisen, die Wälzkörper nicht in diesen Bereich eintreten.

Erst wenn ein vorbestimmter Federweg erreicht wird, kann vorgesehen sein, dass dann die Wälzkörper selbst gegen den zugehörigen Anschlag zur Anlage kommen.

In Ausgestaltung der Erfindung ist vorgesehen, dass einem der Wellenelemente zwei voneinander entlang der Längsachse mit einem Abstand angeordnete Anschläge zugeordnet sind. Eine weitere Möglichkeit sieht vor, dass beiden Wellenelementen jeweils ein Anschlag zugeordnet ist. Alternativ ist es jedoch auch möglich, dass beiden Wellenelementen jeweils zwei voneinander entlang der Längsachse mit einem Abstand angeordnete Anschläge zugeordnet sind.

Obwohl es nur erforderlich ist, einen Satz von Druckfedern vorzusehen, kann es, wenn der Käfig relativ lang ausgebildet ist und eine Vielzahl von Wälzkörpern in den einzelnen Wälzkörperreihen vorhanden sind, sinnvoll sein, entlang der Längsachse hintereinander zwei Sätze von Druckfedern vorzusehen, wobei die Druckfedern der beiden Sätze mit unterschiedlichen Anschlägen zusammenwirken. Um eine absolute Endbegrenzung zu erhalten, wenn der Federweg der Druckfedern aufgebraucht ist, ist vorgesehen, dass der Anschlag so bemessen ist, dass die jeweils an den Enden des Käfigs nahen Wälzköper daran zur Anlage kommen.

Zur Erzielung eines von den Druckfedern unbeaufschlagten Verstellweges des Käfigs gegenüber den Wellenelementen, wenn diese mit Anschlägen versehen sind, ist vorgesehen, dass der Abstand zwischen den einem Wellenelement zugeordneten Anschlägen größer bemessen ist als eine Länge einer Reihe von Wälzkörpern, die einem Paar aus einer ersten Rille und einer zweiten Rille zugeordnet sind, entlang der Längsachse. Alternativ zu der Ausführungsform, können die den Wälzkörpern nahen Enden des Käfigs genutzt werden, um eine absolute Endbegrenzung des Weges des Käfigs vorzunehmen, indem diese gegen einen Anschlag zur Anlage kommen. Nachdem ein bestimmter Federweg durchmessen ist, kann es auch vorgesehen sein, dass mindestens ein Anschlag so angeordnet ist, dass daran Wälzkörper des Käfigs nach einem vorgegebenen Federweg der Druckfeder zur Anlage kommen. Vorzugsweise wird jede Druckfeder von einem Führungselement gehalten, das jeweils in einem der Durchbrüche angeordnet ist. Dabei ist vorgesehen, dass das Führungselement einen Führungsstift mit einem Kopf, der eine Kopffläche und führungsstiftseitig eine Ringfläche aufweist, und eine Führungshülse umfasst, welche auf dem Führungsstift verstellbar ist und führungsstiftseitig eine erste Stirnfläche und dieser abgewandt eine zweite Stirnfläche aufweist, wobei die Druckfeder auf dem Führungsstift zwischen der Ringfläche und der ersten Stirnfläche angeordnet ist. Die Kopffläche und die zweite Stirnfläche dienen dabei zur Abstützung des die Duckfeder umfassenden Führungselements an den Längsenden des zugehörigen Durchbruchs. Dabei kommt mindestens eines der Führungselemente nach Durchmessen der freien Verschiebung des Käfigs gegen den mindestens einen Anschlag zur Anlage.

Die Druckfedern sind dann, wenn zwei Sätze von Druckfedern vorgesehen sind, bevorzugt in entlang der Längsachse hintereinander angeordneten Durchbrüchen aufgenommen.

Bei einer weiteren Ausgestaltung ist vorgesehen, dass das Führungselement zwei Führungsstifte mit je einem Kopf, der eine Kopffläche und führungsstiftseitig eine Ringfläche aufweist, umfasst, wobei die beiden Führungsstifte jeweils in einem der beiden Enden einer Druckfeder einsitzen und die Kopfflächen an den Längsenden der Durchbrüche in unbeaufschlagtem Zustand mit Vorspannung anliegt. Alternativ kann auch vorgesehen sein, dass das Führungselement zwei Führungsstifte mit je einer Kopffläche und einer Stützfläche an den Längsenden aufweist, wobei die zugehörige Druckfeder zwischen den Führungsstiften aufgenommen ist.

Eine besondere Führung der Führungselemente bzw. Führungsstifte ist nicht erforderlich, weil diese einerseits in den Durchbrüchen und andererseits zwischen der Außenfläche des ersten Wellenelements und der Innenfläche des zweiten Wellenelements geführt sind.

Bevorzugte Ausführungsbeispiele der Erfindung sind in der Zeichnung schematisch dargestellt.

Es zeigt
- Figur 1: einen Längsschnitt durch eine erfindungsgemäße Längsverschiebeeinheit einer ersten Ausführungsform von Führungselementen,
- Figur 2: einen Querschnitt II-II gemäß Figur 1,
- Figur 3: das Detail X von Figur 1,
- Figur 4: das Detail Y von Figur 1,
- Figur 5: einen weiteren Längsschnitt durch die Längsverschiebeeinheit gemäß Figuren 1 bis 3 gemäß Schnittlinie V-V von Figur 2,
- Figur 6: den Käfig gemäß der Ausführungsformen 1 bis 5 mit den zugehörigen Führungselementen und Druckfedern in perspektivischer Darstellung,
- Figur 7: eine weitere Ausgestaltungsmöglichkeit für ein Führungselement für die Druckfeder zur Verwendung anstelle der bei den Figuren 1 bis 6 vorgesehenen Einheit und
- Figur 8: eine weitere alternative Gestaltung der Führungselemente für eine Druckfeder als Detail.

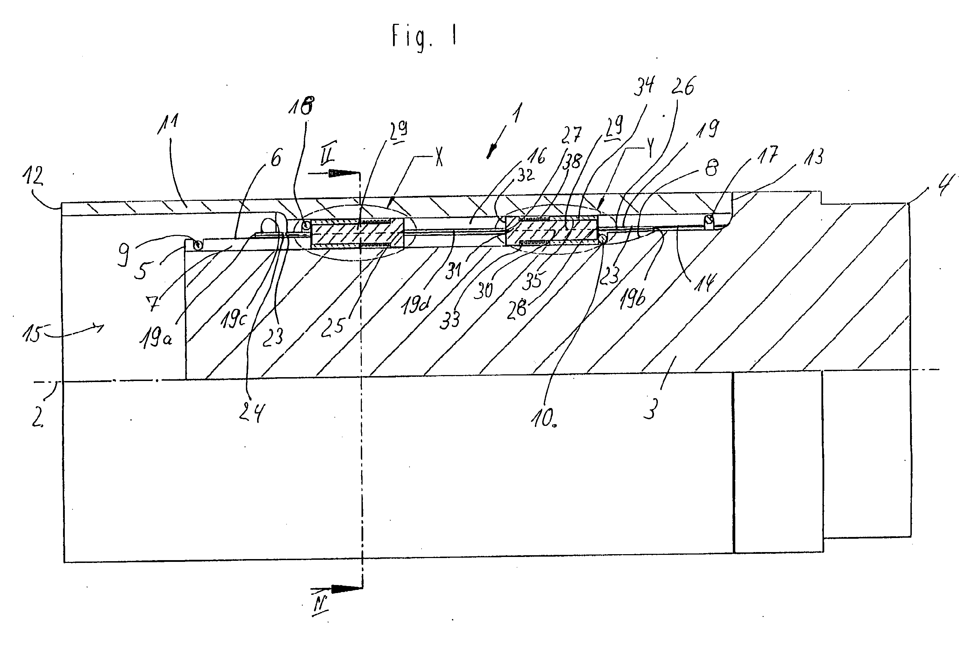

Nachfolgend wird auf die Figuren 1 bis 6 der Beschreibung insgesamt Bezug genommen. Diese Figuren zeigen die Längsverschiebeeinheit in der eingeschobenen Position der beiden Wellenelemente 3, 11 zueinander. Alle Bauteile der Längsverschiebeeinheit 1 sind auf der Längsachse 2 zentriert. Die Längsverschiebeeinheit 1 umfasst ein erstes Wellenelement 3, das dazu entgegen gesetzte Ende ist das erste freie Ende 5.

Das erste Wellenelement 3 besitzt eine Außenfläche 6, in der umfangsverteilt um die Längsachse 2 parallel zur Längsachse verlaufende erste Rillen 7 eingearbeitet sind, die beispielsweise durch einen Kreisbogenradius begrenzt sind.

In Richtung zum ersten Anschlussende 4 hin enden die ersten Rillen 7 jeweils in einem Rillenauslauf 8, in dem sich der Grund der ersten Rillen 7 der Außenfläche 6 annähert.

Zum ersten freien Ende 5 hin ist ein erster Anschlag 9 in Form eines auf einer Stufenfläche sitzenden Ringes dargestellt, welcher auf dieser Stufenfläche durch einen Sicherungsring, der in eine Nut des ersten Wellenelementes 3 eingreift, gehalten ist. Der den ersten Anschlag 9 bildende Ring ist durchmessermäßig so gestaltet, dass sein Außendurchmesser bis in den Bereich der ersten Rillen 7 hineinreicht.

In Richtung zum Rillenauslauf 8 hin ist in die durch die ersten Rillen 7 unterbrochene Außenfläche 6 des ersten Wellenelementes 3 eine Umfangsnut eingeschnitten, in die ein Sicherungsring oder dergleichen Element als zweiter Anschlag 10 eingesetzt ist, wobei dieser ebenfalls im Querschnitt des ersten Wellenelementes 3 gesehen in die ersten Rillen 7 hineinragt.

Zwischen dem ersten Anschlag 9 und dem zweiten Anschlag 10 ergibt sich ein freier Abstand A.

Das erste Wellenelement 3 ist in einer Durchgangsbohrung 15 eines zweiten Wellenelementes 11 aufgenommen, das ein zweites Anschlussende 12 zur Verbindung mit einem Bauteil eines zweiten Kreuzgelenkes darstellt und dem zweiten Anschlussende 12 entfernt ein zweites freies Ende 13. Dem dargestellten verkürzten Zustand der Längsverschiebeeinheit, d.h. der größtmöglichen Einschiebeposition der beiden Wellenelemente 3, 11 zueinander, ist das zweite freie Ende 13 dem ersten Anschlussende 4 angenähert und entsprechend das erste freie Ende 5 dem zweiten Anschlussende 12 angenähert.

Die Durchgangsbohrung 15 bildet eine Innenfläche 14, in der zweite Rillen 16 parallel zur Längsachse 2 verlaufend derart eingearbeitet sind, dass sie jeweils einer entsprechenden ersten Rille 7 gegenüberliegen. Jeweils eine erste Rille 7 und eine zweite Rille 16 bilden ein Paar.

Dem zweiten Wellenelement 11 ist ein dritter Anschlag zugeordnet, der ebenfalls als eine Art Sicherungsring gestaltet ist und in einer Nut sitzt, die die zweiten Rillen 16 schneidet. Dieser dritte Anschlag 17 ist in Richtung zum zweiten freien Ende 13 hin am Ende der zweiten Rillen 16 angeordnet. In Richtung zum zweiten Anschlussende hin befindet sich am Ende der zweiten Rillen 16 ebenfalls eine Umfangsnut, die die zweiten Rillen anschneidet und einen vierten Anschlag 18 bildet, der durch einen Sicherungsring dargestellt ist.

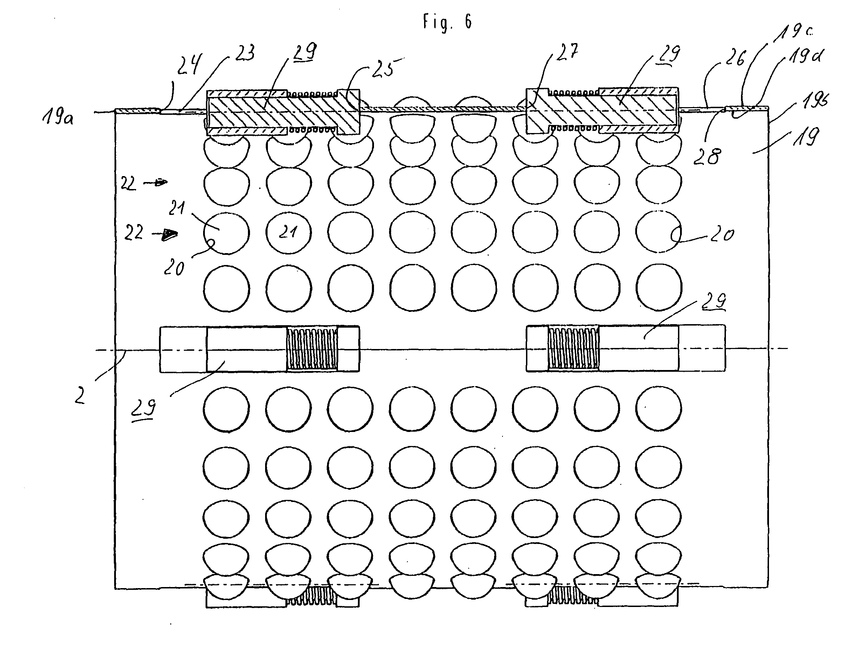

In dem radialen Freiraum zwischen der Innenfläche 14 des zweiten Wellenelementes 11 und der Außenfläche 6 des ersten Wellenelementes 3 befindet sich ein Käfig 19, der näher in Figur 6 dargestellt ist. Dieser Käfig 19 besitzt in Richtung zum ersten freien Ende 5 bzw. zweiten Anschlussende 12 hin ein erstes Käfigende 19a und am entgegen gesetzten Ende ein zum ersten Anschlussende 14 bzw. zweiten freien Ende 13 hinweisendes zweites Käfigende 19b. Der Käfig 19 ist hülsenförmig gestaltet und weist entsprechend den Paaren von ersten Rillen7 im ersten Wellenelement 3 und gegenüberliegenden zweiten Rillen 16 im zweiten Wellenelement 11 umfangsverteilt Reihen von Fenstern 20 auf, die zusätzlich je Reihe entlang der Längsachse 2 beabstandet voneinander sind und zur Aufnahme jeweils einer Kugel als Wälzkörper 21 dienen, die mit ihrem nach innen über die Käfiginnenfläche 19d vorstehenden Bereich jeweils in eine erste Rille 7 und mit ihrem jeweils über die Käfigaußenfläche 19c stehenden Bereich in eine zweite Rille 16 im zweiten Wellenelement eingreifen. Die als Kugeln gestalteten Wälzkörper 21 werden durch den Käfig 19 geführt und dienen zur Drehmomentübertragung zwischen dem ersten Wellenelement 3 und dem zweiten Wellenelement 11. Auf dem Umfang verteilt weist der Käfig 19 darüber hinaus sich parallel zur Längsachse 2 erstreckend jeweils hintereinander entlang der Längsachse 2 angeordnet einen ersten länglichen Durchbruch 23 und einen zweiten länglichen Durchbruch 26 auf, die voneinander beabstandet sind. Der erste Durchbruch 23 endet in Richtung zum ersten Käfigende 19a mit dem ersten Längsende 24 und diesem entfernt mit dem zweiten Längsende 25. Der zweite Durchbruch 26 endet entsprechend dem zweiten Käfigende 19b nahe mit dem vierten Längsende 28 und diesem entfernt, d.h. nahe zum ersten Durchbruch 23 hin mit dem dritten Längsende 27. Insgesamt sind beim vorliegenden Ausführungsbeispiel vier solcher Paare von ersten Durchbrüchen 23 und zweiten Durchbrüchen 26 angeordnet. Es können aber auch entsprechend jeweils weniger oder mehr Paare von Durchbrüchen oder auch Rollen als Wälzkörper vorgesehen sein. Darüber hinaus ist es auch möglich, anstelle von zwei Durchbrüchen 23, 24 nur einen durchgehenden Durchbruch vorzusehen. Jeder Durchbruch 23, 24 dient zur Aufnahme einer Einheit, die jeweils eine Druckfeder 38 umfasst. Dabei ist es möglich, lediglich Druckfedern 38 in den Durchbrüchen vorzusehen oder aber, um wegen der Beaufschlagung durch die Anschläge die Abstützung an den Längsenden günstiger zu gestalten, die Druckfedern jeweils einem Führungselement 29 zuzuordnen. Bei dem Ausführungsbeispiel nach den Figuren 1 bis 6 umfasst das Führungselement 29 einen Führungsstift 30, der einen Kopf 31 besitzt. Vom Führungsstift 30 weg weist der Kopf 31 eine Kopffläche 32 und zum Führungsstift 30 hin eine Ringfläche 33 auf. Auf dem Führungsstift 30 ist eine Führungshülse 34 mit ihrer Bohrung 35 geführt. Die Führungshülse 34 besitzt zum Führungsstift 30 hin eine erste Stirnfläche 36 und dieser abgewandt eine zweite Stirnfläche 37. Auf dem Führungsstift 30 ist die Druckfeder 38, die als Spiraldruckfeder gestaltet ist, aufgenommen und stützt sich mit ihrem einen Ende gegen die Ringfläche 33 und mit ihrem anderen Ende gegen die erste Stirnfläche 26 der Führungshülse 34 ab. Das Führungselement 29 und die Druckfeder 38 sind so bemessen, dass das Führungselement 29 mit der Druckfeder 38 jeweils in einem der Durchbrüche 23, 26 so mit Vorspannung aufgenommen ist, dass sich die Kopffläche 32 bezüglich des ersten Durchbruches 23 an dem ersten Längsende 24 und bezüglich des zweiten Durchbruchs 26 an dem dritten Längsende 27 abstützt. Die Führungshülse 34 stützt sich mit ihrer zweiten Stirnfläche 37 bezüglich des ersten Durchbruchs 23 an dem zweiten Längsende 25 und bezüglich des zweiten Durchbruchs 26 an dem vierten Längsende 28 ab. Diese Ausbildung ist auch für alle weiteren auf dem Umfang des Käfigs 19 verteilt ausgebildeten Durchbrüche gleich.

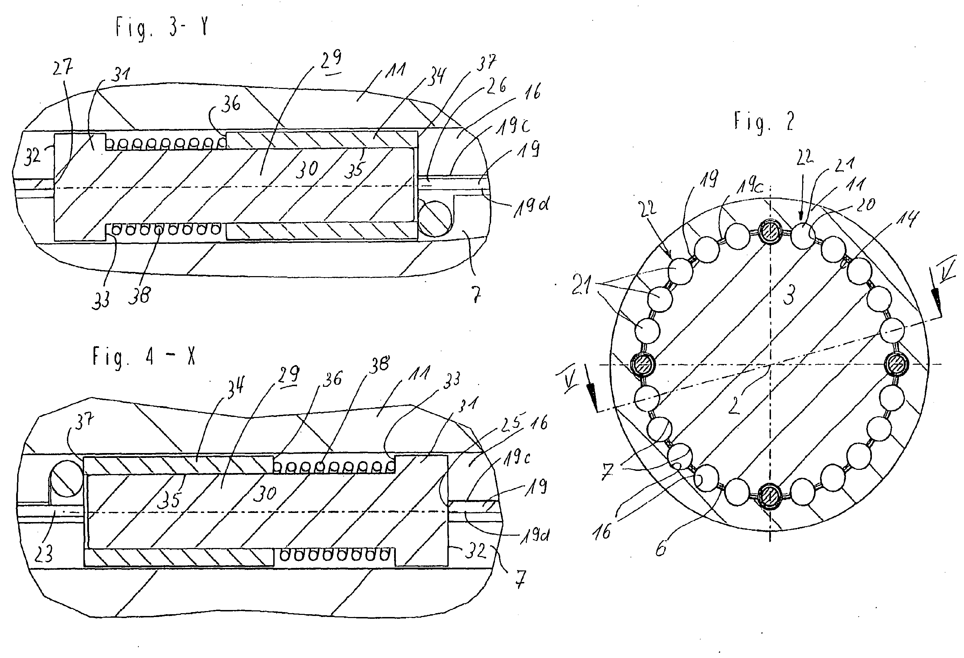

In der größtmöglichen Einfahrposition bzw. verkürzten Position des ersten Wellenelementes 3 zum zweiten Wellenelement 11 befindet sich, wie in Figur 1 dargestellt, die zweite Stirnfläche 37 der Führungshülse 34 bezüglich des dem zweiten Durchbruch 26 zugeordneten Führungselementes 29 in Anlage zum zweiten Anschlag 10, der dem ersten Wellenelement 3 zugeordnet ist. Es ist aus den Figuren 1 und 3 erkennbar, dass die Druckfeder 38 ausgehend von der vorgespannten Position zwischen den Längsenden weiter gespannt wurde und sich die zweite Stirnfläche 37 nicht mehr in Anlage zum dritten Längsende 27 des zweiten Durchbruches 26 befindet. Ebenso befindet sich, da der vierte Anschlag 18 zu der zweiten Stirnfläche 37 der Führungshülse 34 des Führungselementes 29, das sich in dem ersten Durchbruch 23 befindet, in Anlage ist, die zweite Stirnfläche 37 außer Kontakt zum ersten Längsende 24 des ersten Durchbruchs 23. Bei beiden Führungselementen 29 sind die Köpfe 31 an dem zweiten Längsende 25 des ersten Durchbruchs 23 bzw. dem ersten Längsende 27 des zweiten Durchbruchs 26 abgestützt.

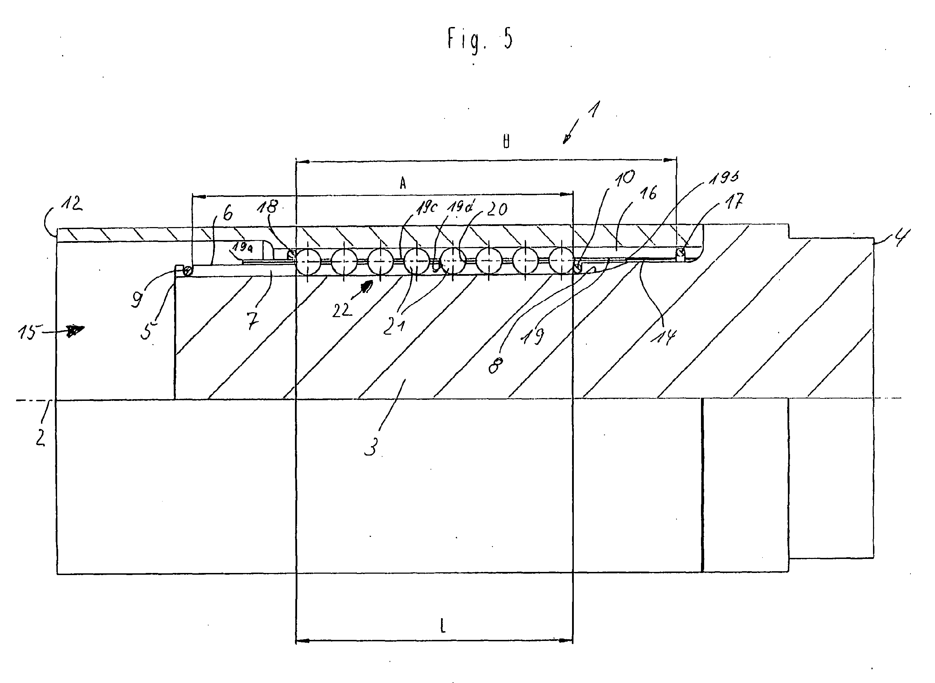

Werden die beiden Wellenelemente 3, 11 auseinander gezogen, nehmen die Führungselemente 29 zunächst wieder eine derartige Position ein, bei der sich auch die zweiten Stirnflächen 37 der Führungshülsen 34 wieder an den entsprechenden Längsenden der beiden Durchbrüche 23, 26 abstützen. Ausgehend von der dabei erreichten Position des Käfigs 19 entlang der Längsachse 2 gegenüber den Wellenelementen kann eine freie Verstellung des Käfigs 19 entlang der Längsachse gegenüber beiden Wellenelementen 3, 11 über die Wälzkörper 21 in den ersten Rillen 7 und zweiten Rillen 16 erfolgen, bis die größte Auszugsposition erreicht ist, in welcher die zweite Stirnfläche 37 des dem ersten Durchbruch 23 zugeordneten Führungelementes 29 gegen den am ersten freien Ende 5 des ersten Wellenelementes 3 angeordneten ersten Anschlag 9 zur Anlage kommt und der dritte Anschlag 17 des zweiten Wellenelementes 11 gegen die zweite Stirnfläche 37 des dem zweiten Durchbruch 26 zugeordneten Führungselementes 29 zur Anlage kommt. Nach Erreichen einer Anlage und Auseinanderbewegen des ersten Wellenelementes 3 und des zweiten Wellenelementes 11 erfolgt ein Zusammendrücken der Druckfedern. Beim Anlaufen werden also die Bewegungen, die die beiden Wellenelemente 3, 11 zueinander ausführen, gedämpft, wenn diese Positionen erreicht werden. Der dritte Anschlag 17 und der vierte Anschlag 18 sind auf einem Abstand B zueinander angeordnet, der ebenfalls größer ist als die Länge L zwischen den äußeren Kugeln einer Kugelreihe. Hieraus sind auch die freien Wege ersichtlich, über die eine Verstellung des ersten Wellenelementes 3 zum zweiten Wellenelement 11 erfolgen kann, ohne dass die Führungselemente 29 zur Wirkung kommen, so dass eine Verstellung des Käfigs 19 zwischen den beiden Wellenelementen 3 und 11 unter Rollreibung erfolgt. Erst wenn die Wege aufgebraucht sind, wirken die Führungselemente 29 mit den Anschlägen zusammen und die Druckfeder kommt zur Wirkung und die Bewegung des Käfigs 19 wird gedämpft. Zusätzlich ist es möglich, wie aus Figur 5 ersichtlich, auch den Federweg zu begrenzen, indem die Anschläge unmittelbar mit den Wälzkörpern 21 nahe den Käfigenden 19a, 19b zusammenwirken.

Es ist jedoch auch möglich, wenn nur eine der Bewegungsrichtungen von Bedeutung ist, den beiden Wellenelementen oder einem der Wellenelemente jeweils nur einen oder zwei Anschläge zuzuordnen.

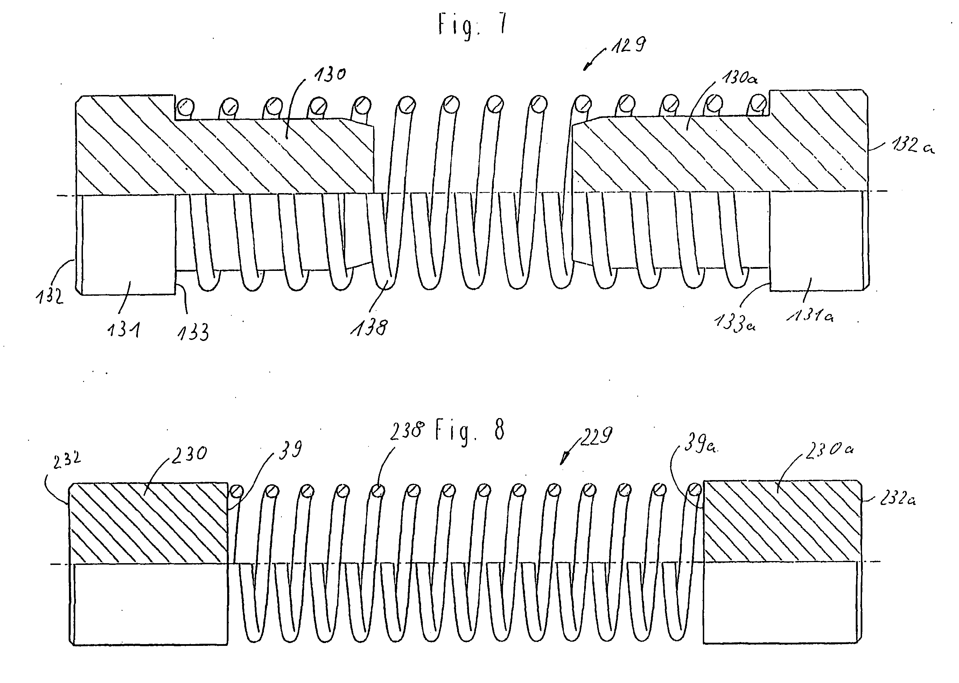

Da die Führungselemente 29 günstig zwischen dem ersten Wellenelement 3 und dem zweiten Wellenelement 11 positioniert sind, ist auch eine vereinfachte Ausführungsform für die Führungselemente 29 möglich. Eine solche erste abgewandelte Ausführungsform ist in der Figur 7 dargestellt. Danach ist das Führungselement 129 auf zwei Führungsstifte 130, 130a reduziert, die jeweils einen Kopf 131 und 131a besitzt, die jeweils dann eine Kopffläche 132, 132a zur Abstützung an den Längsenden der Durchbrüche bilden bzw. für die Abstützung der Druckfeder 138 dieser zugewandt eine Ringfläche 133, 133a bilden. Die Führungsstifte 130, 130a greifen jeweils in die durch die als Spiralfeder ausgestaltete Druckfeder 138 gebildete Bohrung ein.

Eine weitere vereinfachte Ausführungsform gemäß Figur 8 sieht lediglich Führungselemente 229 in Form von Führungsstiften 230, 230a vor, die praktisch den Kopf bei der Ausführungsform gemäß Figur 7 ersetzen und jeweils Flächen 39, 39a zur Abstützung an den Enden der Druckfeder bzw. an den Längsenden der beiden Durchbrüche 23, 36 darstellen.

### Bezugszeichenliste

- 1: Längsverschiebeeinheit
- 2: Längsachse
- 3: erstes Wellenelement
- 4: erstes Anschlussende
- 5: erstes freies Ende
- 6: Außenfläche
- 7: erste Rillen
- 8: erster Rillenauslauf
- 9: erster Anschlag
- 10: zweiter Anschlag
- 11: zweites Wellenelement
- 12: zweites Anschlussende
- 13: zweites freies Ende
- 14: Innenfläche
- 15: Durchgangsbohrung
- 16: zweite Rillen
- 17: dritter Anschlag
- 18: vierter Anschlag
- 19: Käfig
- 19a: erstes Käfigende
- 19b: zweites Käfigende
- 19c: Käfigaußenfläche
- 19d: Käfiginnenfläche
- 20: Fenster
- 21: Wälzkörper
- 22: Wälzkörperreihe
- 23: erster Durchbruch
- 24: erstes Längsende
- 25: zweites Längsende
- 26: zweiter Durchbruch
- 27: drittes Längsende
- 28: viertes Längsende
- 29, 129, 229: Führungselement
- 30, 130, 130a, 230, 230a: Führungsstift
- 31, 131, 231: Kopf
- 32, 132, 132a, 232, 232a: Kopffläche
- 33, 133, 133a: Ringfläche
- 34: Führungshülse
- 35: Bohrung
- 36: erste Stirnfläche
- 37: zweite Stirnfläche
- 38, 138, 238: Druckfeder
- 39, 39a: Stützfläche

- A: Abstand
- B: Abstand
- L: Länge

## Patentansprüche

1. Längsverschiebeeinheit (1) für Gelenkwellen umfassend
- eine Längsachse (2),
- ein erstes Wellenelement (3) mit
- einer Außenfläche (6),
- ersten Rillen (7), die parallel zur Längsachse (2) verlaufen und umfangsverteilt in der Außenfläche (6) angeordnet sind,
- ein zweites Wellenelement (11) mit
- einer entlang der Längsachse (2) sich erstreckenden Durchgangsbohrung (15), in der das erste Wellenelement (3) aufgenommen ist,
- in der Durchgangsbohrung (15), den ersten Rillen (7) jeweils gegenüberliegend angeordneten zweiten Rillen (16), die parallel zur Längsachse (2) verlaufen und umfangsverteilt angeordnet sind,
- einen hülsenförmigen Käfig (19), der
- in der Durchgangsbohrung (15) zwischen erstem Wellenelement (3) und zweitem Wellenelement (11) angeordnet ist und Wälzkörper (21) führt, die jeweils in einander gegenüberliegende erste Rillen (7) und zweite Rillen (16) eingreifen,
- umfangsverteilt parallel zur Längsachse (2) verlaufende Durchbrüche (23, 26) mit Längsenden (24, 25; 27, 28) aufweist,
- Druckfedern (38) aufweist, die zwischen den Längsenden (24, 25; 27, 28) in den Durchbrüchen (23, 26) vorgespannt gehalten sind,
- mindestens einen Anschlag (9, 10, 17, 18), der
- einem der Wellenelemente (3, 11) zugeordnet ist, **dadurch gekennzeichnet, dass** die Druckfedern (38) nach Durchmessen einer von den Druckfedern (38) unbeaufschlagten freien Verschiebung des Käfigs (19) zwischen den beiden Wellenelementen (3, 11) gegen den Anschlag zur Anlage kommen.

2. Längsverschiebeeinheit nach Anspruch 1,
**dadurch gekennzeichnet,**
**dass** einem der Wellenelemente (3, 11) zwei voneinander entlang der Längsachse (2) mit einem Abstand (A, B) angeordnete Anschläge (9, 10, 17, 18) zugeordnet sind.

3. Längsverschiebeeinheit nach Anspruch 1,
**dadurch gekennzeichnet,**
**dass** beiden Wellenelementen (3, 11) jeweils ein Anschlag (9, 10, 17, 18) zugeordnet ist.

4. Längsverschiebeeinheit nach Anspruch 1,
**dadurch gekennzeichnet,**
**dass** beiden Wellenelementen (3, 11) jeweils zwei voneinander entlang der Längsachse (2) mit einem Abstand (A, B) angeordnete Anschläge (9, 10, 17, 18) zugeordnet sind.

5. Längsverschiebeeinheit nach einem der Ansprüche 2 bis 4,
**dadurch gekennzeichnet,**
**dass** zwei Sätze von Druckfedern (38) vorgesehen sind, wobei die Druckfedern (38) der beiden Sätze mit unterschiedlichen Anschlägen (9, 10, 17, 18) zusammenwirken.

6. Längsverschiebeeinheit nach einem der Ansprüche 1 bis 4,
**dadurch gekennzeichnet,**
**dass** der Anschlag (9, 10, 17, 18) so bemessen ist, dass jeweils die den Enden (19a, 19b) des Käfigs (19) nahen Wälzkörper (21) daran zur Anlage kommen.

7. Längsverschiebeeinheit nach Anspruch 6,
**dadurch gekennzeichnet,**
**dass** der Abstand (A, B) zwischen den einem Wellenelement (3, 11) zugeordneten Anschlägen (9, 10, 17, 18) größer bemessen ist als eine Länge (L) einer Reihe (22) von Wälzkörpern (21), die einem Paar aus einer ersten Rille (7) und einer zweiten Rille (16) zugeordnet sind, entlang der Längsachse (2).

8. Längsverschiebeeinheit nach Anspruch 1,
**dadurch gekennzeichnet,**
**dass** mindestens ein Anschlag (9, 10, 17, 18) so angeordnet ist, dass daran Wälzkörper (21) des Käfigs (19) nach einem vorgegebenen Federweg der Druckfeder (38) zur Anlage kommen.

9. Längsverschiebeeinheit nach Anspruch 1,
**dadurch gekennzeichnet,**
**dass** jede Druckfeder (38) von einem Führungselement (29) gehalten wird, das jeweils in einem der Durchbrüche (23, 26) angeordnet ist.

10. Längsverschiebeeinheit nach Anspruch 9,
**dadurch gekennzeichnet,**
**dass** das Führungselement (29) einen Führungsstift (30) mit einem Kopf (31), der eine Kopffläche (32) und führungsstiftseitig eine Ringfläche (33) aufweist, und eine Führungshülse (34) umfasst, welche auf dem Führungsstift (30) verstellbar ist und führungsstiftseitig eine erste Stirnfläche (36) und dieser abgewandt eine zweite Stirnfläche (37) aufweist,
wobei die Druckfeder (38) auf dem Führungsstift (30) zwischen der Ringfläche (33) und der ersten Stirnfläche (36) angeordnet ist.

11. Längsverschiebeeinheit nach Anspruch 10,
**dadurch gekennzeichnet,**
**dass** die Kopffläche (32) und die zweite Stirnfläche (37) zur Abstützung des die Druckfeder (38) umfassenden Führungselements (29) an den Längsenden (24, 25; 27, 28) des zugehörigen Durchbruchs (23, 26) dienen.

12. Längsverschiebeeinheit nach Anspruch 5,
**dadurch gekennzeichnet,**
**dass** die Druckfedern (38) in entlang der Längsachse (2) hintereinander angeordneten Durchbrüchen (23, 26) aufgenommen sind.

13. Längsverschiebeeinheit nach Anspruch 9,
**dadurch gekennzeichnet,**
**dass** das Führungselement (129) zwei Führungsstifte (130, 130a) mit je einem Kopf (131), der eine Kopffläche (132, 132a) und führungsstiftseitig eine Ringfläche (133, 133a) aufweist, umfasst, wobei die beiden Führungsstifte (130, 130a) jeweils in einem der beiden Enden einer Druckfeder (38) einsitzen und die Kopfflächen (132, 132a) an den Längsenden (24, 25, 26, 27) der Durchbrüche (23, 26) in unbeaufschlagtem Zustand mit Vorspannung anliegt

14. Längsverschiebeeinheit nach Anspruch 9,
**dadurch gekennzeichnet,**
**dass** das Führungselement (229) zwei Führungsstifte (230, 230a) mit je einer Kopffläche (232, 232a) und einer Stützfläche (39, 39a) an den Längsenden aufweist, wobei die zugehörige Druckfeder (38) zwischen den Führungsstiften (230, 230a) aufgenommen ist.

15. Längsverschiebeeinheit nach Anspruch 9,
**dadurch gekennzeichnet,**
**dass** mindestens ein Anschlag (9, 10, 17, 18) so angeordnet ist, dass daran mindestens eines der Führungselemente (29, 129) zur Anlage kommt.

## Claims

1. Longitudinal displacement unit (1) for articulated shafts comprising
- a longitudinal axis (2),
- a first shaft element (3) having
- an outer face (6),
- first grooves (7), which extend parallel to the longitudinal axis (2) and are arranged in a circumferentially distributed manner in the outer face (6),
- a second shaft element (11) having
- a through bore (15), extending along the longitudinal axis (2) and in which the first shaft element (3) is accommodated,
- in the through bore (15) second grooves (16), arranged opposite to the first grooves (7) and extending parallel to the longitudinal axis (2) and arranged in a circumferentially distributed manner,
- a sleeve-like cage (19), which
- is arranged in the through bore (15) between the first shaft element (3) and the second shaft element (11) and guides rolling contact members (21), which engage, respectively, in opposite first grooves (7) and second grooves (16),
- has apertures (23, 26) extending in a circumferentially distributed manner parallel to the longitudinal axis (2) and which have longitudinal ends (24, 25; 27, 28),
- has pressure springs (38), which are held in a biased manner between the longitudinal ends (24, 25; 27, 28) in the apertures (23, 26),
- at least one stop (9, 10, 17, 18), which
- is associated to one of the shaft elements (3, 11),
**characterised in that**
the pressure springs (38) abut the stop after a free and, by the pressure springs (38), unloaded displacement of the cage (19) between the two shaft elements (3, 11).

2. Longitudinal displacement unit according to claim 1,
**characterised in**
**that** one of the shaft elements (3, 11) is associated with two stops (9, 10, 17, 18) arranged along the longitudinal axis (2) with a distance (A, B) from one another.

3. Longitudinal displacement unit according to claim 1,
**characterised in that** both shaft elements (3, 11) are, respectively, associated with one stop (9, 10, 17, 18).

4. Longitudinal displacement unit according to claim 1,
**characterised in**
**that** both shaft elements (3, 11) are associated, respectively, with two stops (9, 10, 17, 18) arranged along the longitudinal axis (2) at a distance (A, B) from each other.

5. Longitudinal displacement unit according to one of claims 2 to 4,
**characterised in that** two sets of pressure springs (38) are provided, wherein the pressure springs (38) of both sets interact with different stops (9, 10, 17, 18).

6. Longitudinal displacement unit according to one of claims 1 to 4,
**characterised in**
**that** the stop (9, 10, 17, 18) is dimensioned such, that, respectively, the rolling contact members (21), arranged close to the ends (19a, 19b) of the cage (19), abut it.

7. Longitudinal displacement unit according to claim 6,
**characterised in**
**that** the distance (A,B) between the stops (9, 10, 17, 18) associated with one shaft element (3, 11) is dimensioned larger than a length (L) of a row (22) of rolling contact members (21), which are associated with a pair, formed by a first groove (7) and a second groove (16), along the longitudinal axis (2).

8. Longitudinal displacement unit according to claim 1,
**characterised in**
**that** at least one stop (9, 10, 17, 18) is arranged such, that a rolling contact member (21) of the cage (19) abuts it after a predetermined spring travel of the pressure spring (38).

9. Longitudinal displacement unit according to claim 1,
**characterised in**
**that** each pressure spring (38) is held by a guiding element (29), which is associated, respectively, with one of the apertures (23, 26).

10. Longitudinal displacement unit according to claim 9,
**characterised in**
**that** the guiding element (29) comprises a guiding pin (30) with a head (31), which has a head face (32) and on the guiding pin side an annular face (33), and a guiding sleeve (34), which is displaceable on the guiding pin (30) and has on the guiding pin side a first end face (36) and facing away therefrom a second end face (37),
wherein the pressure spring (38) is arranged on the guiding pin (30) between the annular face (33) and the first end face (36).

11. Longitudinal displacement unit according to claim 10,
**characterised in**
**that** the head face (32) and the second end face (37) serve for supporting the guiding element (29), comprising the pressure spring (38), on the longitudinal ends (24, 25; 27, 28) of the mating aperture (23, 26).

12. Longitudinal displacement unit according to claim 5,
**characterised in**
**that** the pressure springs (38) are accommodated in apertures (23, 26) arranged one behind the other along the longitudinal axis (2).

13. Longitudinal displacement unit according to claim 9,
**characterised in**
**that** the guiding element (129) comprises two guiding pins (130, 130a) with respectively one head (131), which has one head face (132, 132a) and on the side of the guiding pin an annular face (133, 133a), wherein the two guiding pins (130, 130a) rest, respectively, in one of the two ends of a pressure spring (38) and the head faces (132, 132a) abut the longitudinal ends (24, 25, 26, 27) of the apertures (23, 26) in an unloaded condition with a biasing.

14. Longitudinal displacement unit according to claim 9,
**characterised in**
**that** the guiding element (229) has two guiding pins (230, 230a) with, respectively, one head face (232, 232a) and a support face (39, 39a) at the longitudinal ends, wherein the associated pressure spring (38) is received between the guiding pins (230, 230a).

15. Longitudinal displacement unit according to claim 9,
**characterised in**
**that** at least one stop (9, 10, 17, 18) is arranged such, that at least one of the guiding elements (29, 129) abuts it.

## Revendications

1. Unité de déplacement longitudinal (1) pour des arbres de transmission comprenant
- un axe longitudinal (2),
- un premier élément d'arbre (3) avec
- une surface extérieure (6),
- des premières rainures (7), qui s'étendent parallèlement à l'axe longitudinal (2) et sont disposées avec une répartition périphérique dans la surface extérieure (6),
- un second élément d'arbre (11) avec
- un alésage de passage (15) s'étendant le long de l'axe longitudinal (2), dans lequel est réceptionné le premier élément d'arbre (3),
- des secondes rainures (16) disposées dans l'alésage de passage (15) et faisant face respectivement aux premières rainures (7), qui s'étendent parallèlement à l'axe longitudinal (2) et sont disposées avec une répartition périphérique,
- une cage (19) en forme de manchon, qui
- est disposée dans l'alésage de passage (15) entre le premier élément d'arbre (3) et le second élément d'arbre (11) et guide des corps de roulement (21), qui s'engagent respectivement dans des premières rainures (7) et des secondes rainures (16) se faisant face,
- présente des percements (23, 26) répartis à la périphérie et s'étendant parallèlement à l'axe longitudinal (2) avec des extrémités longitudinales (24, 25 ; 27, 28),
- présente des ressorts de pression (38), qui sont maintenus pré-tendus entre les extrémités longitudinales (24, 25; 27, 28) dans les percements (23, 26),
- au moins une butée (9, 10, 17, 18), qui
- est attribuée à l'un des éléments d'arbre (3, 11),
**caractérisée en ce que**
les ressorts de pression (38) viennent s'appuyer contre la butée après le parcours d'un déplacement libre, non sollicité par les ressorts de pression (38), de la cage (19) entre les deux éléments d'arbre (3, 11).

2. Unité de déplacement longitudinal selon la revendication 1,
**caractérisée en ce que**
deux butées (9, 10, 17, 18) disposées à une distance (A, B) l'une de l'autre le long de l'axe longitudinal (2) sont attribuées à l'un des éléments d'arbre (3, 11).

3. Unité de déplacement longitudinal selon la revendication 1,
**caractérisée en ce que**
à chaque fois une butée (9, 10, 17, 18) est attribuée aux deux éléments d'arbre (3, 11).

4. Unité de déplacement longitudinal selon la revendication 1,
**caractérisée en ce que**
à chaque fois deux butées (9, 10, 17, 18) disposées à une distance (A, B) l'une de l'autre le long de l'axe longitudinal (2) sont attribuées aux deux éléments d'arbre (3, 11).

5. Unité de déplacement longitudinal selon l'une quelconque des revendications 2 à 4,
**caractérisée en ce que**
deux ensembles de ressorts de pression (38) sont prévus, les ressorts de pression (38) des deux ensembles coopérant avec différentes butées (9, 10, 17,18).

6. Unité de déplacement longitudinal selon l'une quelconque des revendications 1 à 4,
**caractérisée en ce que**
la butée (9, 10, 17, 18) est dimensionnée de telle sorte qu'à chaque fois les corps de roulement (21) proches des extrémités (19a, 19b) de la cage (19) viennent en appui dessus.

7. Unité de déplacement longitudinal selon la revendication 6,
**caractérisée en ce que**
la distance (A, B) entre les butées (9, 10, 17, 18) attribuées à un élément d'arbre (3, 11) est supérieure à une longueur (L) d'une rangée (22) de corps de roulement (21), qui sont attribués à une paire constituée d'une première rainure (7) et d'une seconde rainure (16), le long de l'axe longitudinal (2).

8. Unité de déplacement longitudinal selon la revendication 1,
**caractérisée en ce que**
au moins une butée (9, 10, 17, 18) est disposée de telle sorte que des corps de roulement (21) de la cage (19) viennent s'appuyer dessus après une course de ressort prédéfinie du ressort de pression (38).

9. Unité de déplacement longitudinal selon la revendication 1,
**caractérisée en ce que**
chaque ressort de pression (38) est maintenu par un élément de guidage (29), qui est disposé à chaque fois dans l'un des percements (23, 26).

10. Unité de déplacement longitudinal selon la revendication 9,
**caractérisée en ce que**
l'élément de guidage (29) comporte une goupille de guidage (30) avec une tête (31), qui présente une surface supérieure (32) et côté goupille de guidage une surface annulaire (33), et une douille de guidage (34), qui est déplaçable sur la goupille de guidage (30) et présente côté goupille de guidage une première surface frontale (36) et, à l'opposé de celle-ci, une seconde surface frontale (37),
le ressort de pression (38) étant disposé sur la goupille de guidage (30) entre la surface annulaire (33) et la première surface frontale (36).

11. Unité de déplacement longitudinal selon la revendication 10,
**caractérisée en ce que**
la surface supérieure (32) et la seconde surface frontale (37) servent au soutien de l'élément de guidage (29) comprenant le ressort de pression (38) sur les extrémités longitudinales (24, 25 ; 27, 28) du percement (23, 26) associé.

12. Unité de déplacement longitudinal selon la revendication 5,
**caractérisée en ce que**
les ressorts de pression (38) sont réceptionnés dans des percements (23, 26) disposés les uns derrière les autres le long de l'axe longitudinal (2).

13. Unité de déplacement longitudinal selon la revendication 9,
**caractérisée en ce que**
l'élément de guidage (129) comporte deux goupilles de guidage (130, 130a) comprenant chacune une tête (131), qui présente une surface supérieure (132, 132a) et côté goupille de guidage une surface annulaire (133, 133a), les deux goupilles de guidage (130, 130a) étant insérées chacune dans l'une des deux extrémités d'un ressort de pression (38) et les surfaces supérieures (132, 132a) s'appliquant sur les extrémités longitudinales (24, 25, 26, 27) des percements (23, 26) dans l'état non sollicité avec une pré-contrainte.

14. Unité de déplacement longitudinal selon la revendication 9,
**caractérisée en ce que**
l'élément de guidage (229) présente deux goupilles de guidage (230, 230a) comprenant chacune une surface supérieure (232, 232a) et une surface de soutien (39, 39a) sur les extrémités longitudinales, le ressort de pression (38) spécifique étant réceptionné entre les goupilles de guidage (230, 230a).

15. Unité de déplacement longitudinal selon la revendication 9,
**caractérisée en ce que**
au moins une butée (9, 10, 17, 18) est disposée de telle sorte qu'au moins l'un des éléments de guidage (29, 129) vient en appui dessus.
